(19) Europäisches Patentamt
European Patent Office
Office européen des brevets

(11) **EP 2 898 010 B1**

(12) **EUROPEAN PATENT SPECIFICATION**

(45) Date of publication and mention
of the grant of the patent:
**06.11.2019 Bulletin 2019/45**

(21) Application number: **13770796.4**

(22) Date of filing: **19.09.2013**

(51) Int Cl.:
*C08K 3/22* (2006.01)          *C08K 5/36* (2006.01)
*C09K 5/14* (2006.01)          *C08L 77/02* (2006.01)
*C08K 3/38* (2006.01)          *C08J 3/20* (2006.01)

(86) International application number:
**PCT/US2013/060617**

(87) International publication number:
**WO 2014/055258 (10.04.2014 Gazette 2014/15)**

(54) **COMPOSITIONS COMPRISING EXFOLIATED BORON NITRIDE AND METHOD FOR FORMING SUCH COMPOSITIONS**

ZUSAMMENSETZUNGEN VON AGGEBLÄTTERTEM BORNITRID UND VERFAHREN ZU IHRER HERSTELLUNG

COMPOSITIONS COMPRENANT DU NITRURE DE BORE DÉLAMINÉ ET PROCÉDÉ POUR LEUR FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2012 US 201261702776 P**
**14.03.2013 US 201313828742**

(43) Date of publication of application:
**29.07.2015 Bulletin 2015/31**

(73) Proprietor: **Momentive Performance Materials Inc.**
**Waterford, NY 12188 (US)**

(72) Inventors:
• **RAMAN, Chandrashekar**
**Sheffield Village, OH 44035 (US)**
• **XIANG, Bei**
**Strongsville, OH 44136 (US)**
• **MURUGAIAH, Anand**
**Strongsville, OH 44136 (US)**
• **LIN, Kang Yi**
**Middleburg Heights, OH 44130 (US)**

(74) Representative: **Müller-Boré & Partner**
**Patentanwälte PartG mbB**
**Friedenheimer Brücke 21**
**80639 München (DE)**

(56) References cited:
**US-A- 5 900 447          US-A1- 2005 041 373**
**US-A1- 2006 293 427          US-A1- 2007 026 221**
**US-A1- 2011 045 223          US-A1- 2011 165 410**
**US-B2- 6 951 583**

• **DATABASE WPI Week 201201 Thomson Scientific, London, GB; AN 2011-P52468 XP002715472, -& KR 2011 0124127 A (SHIN KOBE ELECTRIC MACHINERY) 16 November 2011 (2011-11-16)**
• **DATABASE WPI Week 201247 Thomson Scientific, London, GB; AN 2012-H93034 XP002715473, & WO 2012/093895 A2 (DOOSAN CORP) 12 July 2012 (2012-07-12)**
• **DATABASE WPI Week 201233 Thomson Scientific, London, GB; AN 2012-B89323 XP002715474, & CN 102 321 364 A (DONGGUAN PUQIANG HIGH POLYMER MATERIAL) 18 January 2012 (2012-01-18)**

**Description**

The present invention relates to compositions comprising boron nitride, in particular compositions comprising exfoliated boron nitride, and methods for making such compositions. The present invention also relates to a method for forming a thermally conductive composition comprising boron nitride via the in situ exfoliation of boron nitride in a resin material.

Thermal management of various electronic and opto-electronic devices is increasingly gaining attention due to the severe challenges faced in such devices. The trend of shrinking sizes and increased functionality continues in personal hand-held electronic devices. The power density, and hence the density of heat that needs to be dissipated have significantly increased, which poses significant challenges to providing good thermal management in those devices. Similarly, in opto-electronic devices, also known as light emitting diodes (LEDs), the power consumption and lumen output is ever increasing. Thermal management problems are also widely prevalent in other applications such as electronic components in automobiles, rechargeable battery systems and power invertors for hybrid vehicles, etc. Insufficient or ineffective thermal management can have a strong and deleterious effect on the performance and long-term reliability of devices.

Currently, LED-based bulbs are being used to replace older bulbs and are designed to fit into conventional "Edison" sockets. Fitting LED bulbs into Edison sockets only exacerbates the thermal management challenges since the heat dissipation is limited by natural convection. LED bulbs therefore require well-designed heat sinks to efficiently and adequately dissipate the waste heat. Inefficient thermal management leads to higher operating temperatures of the LEDs, which is indicated by the junction temperature (Tj) of the LED. The lifetime of an LED (defined as time taken to lose 30% light output, i.e., to reach B30) can possibly decrease from 80,000 hours to 20,000 hours when the junction temperature is increased from 115°C to 135 °C.

Aluminum heat sinks are a natural choice for LED applications based on similarities to heat sinks used for other electronic devices. However the use of aluminum heat sinks for LED bulbs presents several challenges. One challenge is electrically insulating the heat sink from the Edison socket. Any electrical connectivity or leak between a metal heat sink and the socket can be extremely dangerous during installation. Another challenge is providing heat sinks with complex shapes because die-casting heat fin shapes can be difficult and may require costly secondary machining operations. Aluminum heat sinks can also be quite heavy and can add significantly to the weight, and consequently the cost of transportation, of the bulb. Finally, aluminum heat sinks will need a finish step of painting to smooth surface finish and impart colors desired by the consumers.

Plastic heat sinks are an alternative to aluminum heat sinks. Plastics are electrically insulating, more amenable to complex heat sink structures via injection molding, light in weight, and can be colored freely to meet aesthetic or branding requirements. Plastics also offer the possibility of integrating several parts, which can lead to a simpler overall bulb assembly. Plastics, however, have very poor thermal conductivity - generally only around 0.2 W/mK - which is nearly two orders of magnitude lower than aluminum (around 200 W/mK). Therefore, plastics are generally not sufficient to meet thermal management challenges.

Fillers are often added to plastics to make unique composite materials. For example, reinforcing fillers like glass fibers are added to improve the mechanical properties of plastics. Similarly graphite, carbon black or other carbon forms, including even carbon nanotubes recently are added to plastics to make electrically conductive plastic-based materials. Graphite and metal powders are also used sometimes to enhance thermal conductivity, but this usually leads to increased electrical conductivity as well since these properties are usually concomitant. However, some ceramic materials such as silica, alumina, zinc oxide, magnesium oxide, aluminum nitride, boron nitride (hexagonal or cubic forms), etc., present the opportunity to make thermally conductive yet electrically insulating formulations with plastics since they are good thermal conductors and electrical insulators.

While boron nitride/plastic composites have been proposed, boron nitride/plastic composites have several drawbacks. Boron nitride is a relatively expensive material that can cost from 10 to 40 times more than the plastic resins that it is compounded with and as compared to aluminum alloys. From a performance standpoint, the in-plane thermal conductivity of the boron nitride/plastic composite is only around 2-10 W/mK even at high loadings of boron nitride, e.g., above 25-60 wt.% (15-45 vol %). Boron nitride is also very inert and not easily wetted by resins. This leads to imperfect interfaces and large thermal resistances between the filler and matrix, effectively lowering the thermal conductivity of the composite thus leading to higher BN loadings required to achieve the required thermal conductivity. The higher filler loadings drives up the cost of these composites significantly making it less cost competitive in thermal management applications. The poor interfaces between the filler and resin also results in poor physical properties of the composites. It therefore becomes imperative to address the problems of wetting to achieve high thermal conductivity and optimum physical properties.

It is important to note however that even though thermal conductivity of thermally conductive plastics is not as high as aluminum metal, it is sufficient for thermal management applications in LED bulbs, and other convection limited applications. Boron nitride/plastics composites are anisotropic, which can also be an issue that may limit the applicability of boron nitride/plastic composites.

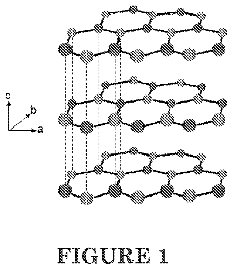

The crystal structure of hexagonal BN is shown in FIGURE 1. The a-b crystal planes are made of tight, covalently-bonded boron and nitrogen atoms. The a-b planes are repeated along the c-direction held together by weak van der Waal's forces. Due to this crystal structure, the natural particle shape of hexagonal BN particles are platelets and typically have aspect ratios (~10-50).

Where anisotropy is acceptable, the high aspect ratio of BN can be an advantage. Typically, all else being equal, the higher the aspect ratio, the higher the thermal conductivity.

The crystal structure of hexagonal BN shown in FIGURE 1 is very similar to graphite. Exfoliation of graphite has been used as a way to increase the aspect ratio of graphite particles and increase thermal conductivity performance. In contrast to graphite, the exfoliation of hexagonal BN is extremely difficult due to the partially ionic or polar character of the boron and nitrogen atoms. Intercalation and exfoliation of BN crystals has been demonstrated in the lab, but by exceptionally difficult means that pose several challenges to scale-up and commercialization. (Shen et al. "Intercalation of Hexagonal Boron Nitride by Strong Oxidizers and Evidence for the Metallic Nature of the Products", Journal of Solid State Chemistry, v147, pp74-81 (1999).) Even if BN crystals are successfully exfoliated, compounding these nano-scale high surface area materials into resins, achieving good dispersion and wetting of the fillers by the matrix will also be extremely challenging.

KR 2011/0124127 A describes a thermoplastic resin composition and molded products thereof.

In one aspect, the present invention provides compositions comprising exfoliated boron nitride. In another aspect, the present invention provides a method for making a composition comprising exfoliated boron nitride. The compositions can exhibit high thermal conductivities

In one embodiment, the present invention provides composition comprising a resin material, exfoliated boron nitride, a silane as functionalization additive, and a hard filler material having a Mohs hardness greater than the Mohs hardness of hexagonal boron nitride, wherein the exfoliated boron nitride is produced in situ by mixing boron nitride crystals with the resin material in the presence of the hard filler, wherein the boron nitride, hard filler material, and silane are provided as a blended filler composition comprising a blend of the boron nitride, hard filler material, and the silane, and wherein the silane is chosen from a thiocarboxylate silane, a blocked mercapto silane, or a combination thereof.

In another embodiment, the present invention provides a method of forming a thermally conductive composition comprising a blended filler composition comprising a blend of exfoliated boron nitride, a hard filler material, and a silane, the method comprising exfoliating boron nitride crystals in situ by mixing the blended filler composition in a resin material, wherein the silane is chosen from a thiocarboxylate silane, a blocked mercapto silane, or a combination thereof.

The in situ exfoliation of boron nitride crystals in a resin matrix allows for forming a composition that exhibits relatively high thermal conductivities without having to exfoliate the boron nitride in a separate step prior to compounding with the resin material.

In one aspect, the present invention provides, a composition comprising a resin material, exfoliated boron nitride, a silane as functionalization additive, and a hard filler material having a Mohs hardness greater than the Mohs hardness of hexagonal boron nitride, wherein the exfoliated boron nitride is produced in situ by mixing boron nitride crystals with the resin material in the presence of the hard filler, wherein the boron nitride, hard filler material, and silane are provided as a blended filler composition comprising a blend of the boron nitride, hard filler material, and the silane, and wherein the silane is chosen from a thiocarboxylate silane, a blocked mercapto silane, or a combination thereof.

In one embodiment, the composition comprises from 15 weight percent to 60 weight percent of boron nitride; from 1 weight percent to 55 weight percent of the hard filler material; from 0 to 15 weight percent of the functionalization additive; and from 20 weight percent to 75 weight percent of the resin material.

In one embodiment, the composition comprises from 10 weight percent to 50 weight percent of boron nitride; from 20 weight percent to 50 weight percent of the hard filler material; from 0.1 to 7 weight percent of the functionalization additive; and from 20 weight percent to 75 weight percent of the resin material.

In one embodiment, the composition comprises from 15 volume percent to 50 volume percent of boron nitride.

In one embodiment, the composition comprising the exfoliated boron nitride has a greater number of boron nitride particles than the volume of boron nitride in a composition that is devoid of the hard filler material.

In one embodiment, the exfoliated boron nitride has an average thickness of 1 micron or less; 0.5 micron or less; even 0.2 micron or less.

In one embodiment, the ratio of hard filler material to boron nitride is at least from 20:1 to 1:20 by volume; from 15:1 to 1:15 by volume; from 10:1 to 1:10 by volume; from 3:1 to 1:3 by volume. The composition of any of claims 1-8, wherein the ratio of hard filler material to boron nitride is at least from 2:1 to 1:2 by volume; even 1:1 by volume.

In one embodiment, the boron nitride crystal diameter is greater than 0.5 microns. In one embodiment, the boron nitride crystal diameter is greater than 1 micron. In one embodiment, the boron nitride crystal diameter is greater than 3 microns. In one embodiment, the boron nitride crystal diameter is greater than 8 microns. In one embodiment, the boron nitride crystal diameter is greater than 12 microns. In one embodiment, the boron nitride crystal diameter is greater than 25 microns. In one embodiment, the boron nitride crystal diameter is greater than 40 microns.

In one embodiment, the boron nitride crystal surface area is less than 50 m²/g. In one embodiment, the boron nitride crystal surface area is less than 20 m²/g In one embodiment, the boron nitride crystal surface area is less than 15 m²/g. In one embodiment, the boron nitride crystal surface area is less than 10 m²/g. In one embodiment, the boron nitride crystal surface area is less than 5 m²/g. In one embodiment, the BN crystal surface area is less than 1.5 m²/g.

In one embodiment, the boron nitride graphitization index is less than 4; less than 2; less than 1.5; less than 1.0.

In one embodiment, the hard filler material is chosen from zinc oxide, magnesium oxide, silica, alumina, aluminum nitride, silicon nitride, silicon carbide, titania, tungsten carbide, titanium nitride, cubic boron nitride, diamond, or a combination of two or more thereof.

In one embodiment, hard filler material has a Mohs hardness of 4.5 or greater. In one embodiment, the hard filler material has a Mohs hardness of from 2 to 9.5.

The functionalization additive is a silane,. chosen from a thiocarboxylate silane, a blocked mercapto silane, or a combination thereof.

In one embodiment, the functionalization additive is present in an amount of from 1 weight percent to 10 weight percent.

In one embodiment, the composition has a thermal conductivity of 5 W/mK or greater. In one embodiment, the composition has a thermal conductivity of from 5 W/mK to 15 W/mK.

In one embodiment, the present invention provides a method of forming a thermally conductive composition comprising a blended filler composition comprising a blend of exfoliated boron nitride, a hard filler material, and a silane, the method comprising exfoliating boron nitride crystals in situ by mixing the blended filler composition in a resin material, wherein the silane is chosen from a thiocarboxylate silane, a blocked mercapto silane, or a combination thereof.

These and other aspects are further understood with reference to the following detailed description.

FIGURE 1 illustrates the crystal structure of hexagonal boron nitride;

FIGURE 2 is an SEM image of a nylon composition comprising 40% boron nitride that is not exfoliated;

FIGURE 3 is a SEM image showing a highly crystalline boron nitride that has not been compounded or dispersed in a resin;

FIGURE 4 is a SEM image of a nylon composition comprising exfoliated boron nitride prepared in accordance with one embodiment of the invention; and

FIGURE 5 is a SEM image of a nylon composition comprising exfoliated boron nitride prepared in accordance with one embodiment of the invention.

The present invention provides a composition comprising exfoliated boron nitride disposed in a resin matrix. The compositions comprise a resin matrix, exfoliated boron nitride, and a filler material dispersed in the resin matrix, the filler material having a Mohs hardness greater than the Mohs hardness of hexagonal boron nitride crystals. The present invention also provides a method for forming the composition comprising the in situ exfoliation of boron nitride in a resin matrix.

The method of forming a composition comprising exfoliated boron nitride comprises mixing crystalline boron nitride into a resin material in the presence of a material having a Mohs hardness greater than the Mohs hardness of (non-exfoliated) crystalline boron nitride material. The inventors have found that mixing crystalline boron nitride into a resin matrix in the presence of a material having a Mohs hardness greater than the crystalline boron nitride results in exfoliation of the boron nitride crystals. The exfoliation of the boron nitride crystals occurs in situ. The resulting material has a thermal conductivity higher than a similar composition that is devoid of any hard filler material. The in-situ exfoliation of the boron nitride crystals allows for a high thermal conductivity to be formed without a separate step of exfoliating boron nitride and subsequently compounding the exfoliated boron nitride into a resin material.

Mixing the crystalline boron nitride and the resin material can be accomplished using any suitable mixing method. Mixing can be accomplished by any type of mixing equipment or device suitable for mixing resin materials. Examples of suitable mixing equipment includes, but is not limited to, Brabender mixers, Banbury mixers, a roll or a set of rollers, a kneader, a co-kneader, a single screw extruder, a twin screw extruder, etc.

The boron nitride component comprises crystalline or partially crystalline boron nitride particles made by processes known in the art. These include spherical BN particles in the micron size range produced in a process utilizing a plasma gas as disclosed in U.S. Pat. No. 6,652,822; hBN powder comprising spherical boron nitride agglomerates is formed from irregular non-spherical BN particles bound together by a binder and subsequently spray-dried, as disclosed in US Patent Publication No. US2001/0021740; BN powder produced from a pressing process as disclosed in U.S. Pat. Nos. 5,898,009 and 6,048,511; BN agglomerated powder as disclosed in US Patent Publication No. 2005/0041373; BN powder having high thermal diffusivity as disclosed in US Patent Publication No. US2004/0208812A1; and highly delaminated BN powder as disclosed in U.S. Pat. No. 6,951,583. These also include BN particles of the platelet morphology.

In one embodiment, the BN powder has an average particle size of at least 50 microns (μm). In another embodiment, the BN powder has an average particle size of 1 μm to 500 μm; from 5 μm to 100 μm; even from 10 μm

to 30 $\mu$m. In one embodiment, the BN powder comprises irregularly shaped agglomerates of hBN platelets, having an average particle size of above 10 $\mu$m. Here, as elsewhere in the specification and claims, numerical values can be combined to form new and non-disclosed ranges. Particle size can be measured using a Horiba LA300 particle size distribution analyzer where the particle to be analyzed (e.g., BN) is introduced in an amount adjusted to meet the required transmission. A few drops of 2% Rhodapex CO-436 can be added to improve the dispersion of the powder, and the particle size can be measured using laser diffraction after a 3 second sonication. The particle size distribution resulting from the measurement can be plotted on a volume basis and the D90 represents the 90th percentile of the distribution.

In another embodiment, the BN powder is in the form of spherical agglomerates of hBN platelets. In one embodiment of spherical BN powder, the agglomerates have an average agglomerate size distribution (ASD) or diameter from 10 $\mu$m to 500 $\mu$m. In another embodiment, the BN powder is in the form of spherical agglomerates having an ASD in the range of 30 $\mu$m to 125 $\mu$m. In one embodiment, the ASD is 74 to 100 microns. In another embodiment, 10 $\mu$m to 40 $\mu$m. Here, as elsewhere in the specification and claims, numerical values can be combined to form new and non-disclosed ranges.

In one embodiment, the BN powder is in the form of platelets having an average length along the b-axis of at least 1 micron, and typically between 1 $\mu$m and 20 $\mu$m, and a thickness of no more than 5 microns. In another embodiment, the powder is in the form of platelets having an average aspect ratio of from 20 to 300.

In one embodiment, the boron nitride crystal diameter is greater than 0.5 microns. In one embodiment, the boron nitride crystal diameter is greater than 1 micron. In one embodiment, the boron nitride crystal diameter is greater than 3 microns. In one embodiment, the boron nitride crystal diameter is greater than 8 microns. In one embodiment, the boron nitride crystal diameter is greater than 12 microns. In one embodiment, the boron nitride crystal diameter is greater than 25 microns. In one embodiment, the boron nitride crystal diameter is greater than 40 microns.

In one embodiment, the boron nitride crystal surface area is less than 50 $m^2$/g. In one embodiment, the boron nitride crystal surface area is less than 20 $m^2$/g. In one embodiment, the boron nitride crystal surface area is less than 15 $m^2$/g. In one embodiment, the boron nitride crystal surface area is less than 10 $m^2$/g. In one embodiment, the boron nitride crystal surface area is less than 5 $m^2$/g. In one embodiment, the BN crystal surface area is less than 3 $m^2$/g. In one embodiment, the BN crystal surface area is less than 1.5 $m^2$/g.

In one embodiment, the BN is an h-BN powder having a highly ordered hexagonal structure with a crystallization index of at least 0.12; at least 0.20; at least 0.30; at least 0.45; even at least 0.55. In another embodiment, the BN powder has a crystallization index of 0.20 to 0.55; from 0.30 to 0.55; even from 0.40 to 0.55. Here, as elsewhere in the specification and claims, numerical values can be combined to form new and non-disclosed ranges.

In one embodiment, the boron nitride has a graphitization index is less than 4; less than 2; less than 1.5, even less than 1. In another embodiment, the boron nitride has a graphitization index from 0.1 to 4; from 0.5 to 3; even from 1 to 2. Here, as elsewhere in the specification and claims, numerical values can be combined to form new and non-disclosed ranges.

In one embodiment, the exfoliated boron nitride has an average thickness of 1 micron or less; 0.5 micron or less; even 0.2 micron or less.

The crystalline boron nitride is mixed with a hard filler material having a Mohs hardness greater than the Mohs hardness of the (non-exfoliated) crystalline boron nitride. In one embodiment, the hard filler material has a Mohs hardness of 2 or greater; 3 or greater; 4 or greater; 5 or greater; 6 or greater; even 8 or greater. In one embodiment, the hard material has a Mohs hardness of from 2 to 9; from 3 to 8; from 4.0 to 7.5; even from 4.5 to 6.5. Here as elsewhere in the specification and claims, numerical values can be combined to form new and non-disclosed ranges.

The hard filler material can be selected as desired for a particular purpose or intended use. Examples of suitable hard materials include, but are not limited to, a metal oxide such as, e.g., zinc oxide, magnesium oxide, aluminum oxide, beryllium oxide, yttrium oxide, hafnium oxide, etc.; a nitride such as, e.g., aluminum nitride, silicon nitride, cubic boron nitride, etc.; silica; a carbide, e.g., silicon carbide, titanium carbide, tantalum carbide, beryllium carbide, boron carbide, etc.; a boride, e.g., zirconium boride, titanium diboride, aluminum boride, other oxides, nitrides, oxy-nitrides, carbides, borides, silicides, or a combination of two or more thereof, etc. Paticles or metals or pure elements may also be suitable for use including, but not limited to, powders, particles, or flakes of aluminum, silver, copper, bronze, brass, boron, silicon, nickel, nickel alloys, tungsten, tungsten alloys, etc. Minerals such as apatite, feldspar, topaz, garnet, andalusite, asbestos, barite, flint fluorite, hematite, pyrite, quartz, etc. Other polyatomic molecules of sufficient hardness such as perovskites, titanates, silicates, chalcogenides, etc. can also be suitable hard filler materials. It will be appreciated that the composition can comprise two or more hard filler materials.

The hard filler material can have an average particle size of less than 100 microns; less than 50 microns; less than 30 microns; less than 20 microns; less than 15 microns; less than 10 microns; less than 3 microns; less than 1 micron; even less than 100 nanometers. In one embodiment the hard filler material has an average particle size of from 50 nanometers to 100 microns; from 100 nanometers to 50 micron; from 250 nanometers to 30 micron; from 500 nanometers to 25 micron; even from 1 to 15 micron. Here as elsewhere in the specification and claims, numerical values can be combined to form new and non-disclosed ranges.

The thermally conductive compositions comprise a silane as functionalization additive. The silane additive is chosen from a thiocarboxylate silane, a blocked mercapto silane, or a combination thereof. In one embodiment, the thermally conductive compositions can comprise from 0.1 to 6 wt. % of a functionalization additive; from 1.5 to 4 wt.%; even from 2.7 to 3.7 wt. %. Here as elsewhere in the specification and claims, numerical values can be combined to form new and non-disclosed ranges.

The silane is added to a filler or filler composition prior to introduction into the mixing or processing equipment.

In addition to silanes various other classes of functionalization additives can be added to improve the interface between the fillers and the resin matrix. Other examples of functionalization additives include organometallic compounds such as titanates & zirconates (e.g., Ken-react by Kenrich), aluminates, hyperdispersants (e.g., Solsperse by Lubrizol), maleated oligomers such as maleated polybutadiene resin or styrene maleic anhydride copolymer (e.g., those from Cray Valley), fatty acids or waxes and their derivatives, and ionic or non-ionic surfactants. These functionalization additives may be used at 1 wt. % to 15 wt%; or from 3 wt. % to 12 wt. %; even from 5 wt. % to 10 wt. %. Here as elsewhere in the specification and claims, numerical values can be combined to form new and non-disclosed ranges.

The filler material is provided as a blend of boron nitride, hard filler material, and a silane.

In one embodiment, the thermally conductive filler is provided as a blend or composite of boron nitride, hard filler material, a silane additive, and optionally other filler materials. In one embodiment, the thermally conductive filler composition comprises a blended composition comprising boron nitride in an amount of from 15 weight percent to 70 weight percent; a hard filler in an amount of from 1 weight percent to 75 weight percent; and a functionalization additive in an amount of from 0.1 weight percent to 6 weight percent. In one embodiment, the thermally conductive filler composition comprises a blended composition comprising boron nitride in an amount of from 25 weight percent to 60 weight percent; a hard filler material in an amount of from 15 weight percent to 60 weight percent; and a functionalization additive in an amount of from 0.5 weight percent to 5 weight percent. In one embodiment, the thermally conductive filler composition comprises a blended composition comprising boron nitride in an amount of from 30 weight percent to 50 weight percent; a hard filler material in an amount of from 20 weight percent to 50 weight percent; and a functionalization additive in an amount of from 1 weight percent to 3.5 weight percent. In one embodiment, the thermally conductive filler composition comprises a blended composition comprising boron nitride in an amount of from 35 weight percent to 45 weight percent; a hard filler material in an amount of from 30 weight percent to 40 weight percent; and a functionalization additive in an amount of from 1.5 weight percent to 2.5 weight percent. In still another embodiment, the thermally conductive filler comprises a blended composition comprising boron nitride in an amount of from 15 weight percent to 40 weight percent; a hard filler material in an amount of from 5 weight percent to 50 weight percent; and a silane additive in an amount of from 1 weight percent to 4 weight percent. In one embodiment, the composition comprises from 15 weight percent to 60 weight percent of boron nitride; from 1 weight percent to 55 weight percent of the hard filler material; from 0 to 15 weight percent of the functionalization additive; and from 20 weight percent to 75 weight percent of the resin material. In one embodiment, the composition comprises from 10 weight percent to 50 weight percent of boron nitride; from 20 weight percent to 50 weight percent of the hard filler material; from 0.1 to 7 weight percent of the functionalization additive; and from 20 weight percent to 75 weight percent of the resin material. Here as elsewhere in the specification and claims, numerical values can be combined to form new and non-disclosed ranges.

In one embodiment, the blended filler composition comprises boron nitride, hard filler material, a silane additive, and glass fiber or glass flake. As used herein "glass fiber" can also refer to and will encompass glass flake.

The composite or blended filler compositions can be prepared by any suitable method to mix the various components in the filler composition. In one embodiment, the boron nitride, hard filler material, and optional additional filler are mixed together in a blender and the silane additive is introduced into the blender. The composite or blended filler composition can be a substantially homogeneous mixture or blend of the component materials.

The blend of the boron nitride, hard filler material, and the silane (and the optional other filler materials, e.g., a metal oxide) can be blended and treated prior to introduction into the resin composition to covalently bind the silane to the blend of the boron nitride and the hard filler material. Suitable blending methods are v-blender with various intensifier bars, paddle blenders, ribbon blenders etc. This can be accomplished by subjecting the blend of the boron nitride, hard filler material, and the silane to conditions to hydrolyze the silane and allow the hydrolyzed silane to react with the filler surface. In one embodiment, treating the blended filler can be carries out by exposing the material to moisture and heat. While not being bound to any particular theory, heat treating the filler comprising the blend of the boron nitride and the silane can cause condensation of the silane on the filler and chemically react and bind the silane to the filler surface. The inventors have found that heat treating the blended filler compositions prior to use in the resin composition can improve the thermal conductivity of the composition. While the blended filler can be exposed to temperatures during processing of the resin composition that are capable of binding the silane to the filler materials, silane material that is not bonded to the filler material can potentially evaporate at the high processing temperatures.

In one embodiment, the blend of the boron nitride, hard filler material, and the silane can be treated by heating at 50 °C for seventy two hours in a convection oven. In another embodiment, the filler blend comprising boron nitride, a metal oxide and an optional glass fiber and the silane can be heat treated at 60 °C for four hours. In one embodiment the heat treatment is at 80 °C for two hours. In one embodiment the heat treatment is carried out under controlled moisture conditions. In one embodiment the heat treatment is carried out at 50 °C and 50% relative humidity for twenty four hours.

The polymer matrix material can include any polymer or resin material as desired for a particular purpose or intended application. In one embodiment, the resin material can be a thermoplastic material. In another embodiment, the resin material can be a thermoset material. Examples of suitable resin materials include, but are not limited to, polycarbonate; acrylonitrile butadiene styrene (ABS) ($C_8H_8C_4H_6C_3H_3N$); polycarbonate/acrylonitrile butadiene styrene alloys (PC-ABS); polybutylene terephthalate (PBT); polyethylene therephthalate (PET); polyphenylene oxide (PPO); polyphenylene sulfide (PPS); polyphenylene ether; modified polyphenylene ether containing polystyrene; liquid crystal polymers; polystyrene; styrene-acrylonitrile copolymer; rubber-reinforced polystyrene; poly ether ketone (PEEK); acrylic resins such as polymers and copolymers of alkyl esters of acrylic and methacrylic acid styrene-methyl methacrylate copolymer; styrene-methyl methacrylate-butadiene copolymer; polymethyl methacrylate; methyl methacrylate-styrene copolymer; polyvinyl acetate; polysulfone; polyether sulfone; polyether imide; polyarylate; polyamideimide; polyvinyl chloride; vinyl chloride-ethylene copolymer; vinyl chloride-vinyl acetate copolymer; polyimides, polyamides; polyolefins such as polyethylene; ultra high molecular weight polyethylene; high density polyethylene; linear low density polyethylene; polyethylene napthalate; polyethylene terephthalate; polypropylene; chlorinated polyethylene; ethylene acrylic acid copolymers; polyamides, for example, nylon 6, nylon 6,6, and the like; phenylene oxide resins; phenylene sulfide resins; polyoxymethylenes; polyesters; polyvinyl chloride; vinylidene chloride/vinyl chloride resins; and vinyl aromatic resins such as polystyrene; poly(vinylnaphthalene); poly(vinyltoluene); polyimides; polyaryletheretherketone; polyphthalamide; polyetheretherketones; polyaryletherketone, and combinations of two or more thereof.

The choice of resin matrix material may depend on the particular requirements of the application for which the boron nitride/resin composite material is to be used. For example, properties such as impact resistance, tensile strength, operating temperature, heat distortion temperature, barrier characteristics, etc., are all affected by the choice of polymer matrix material.

In some embodiments, the resin matrix material can include one or more polyamide thermoplastic polymer matrices. A polyamide polymer is a polymer containing an amide bond (--NHCO--) in the main chain and capable of being heat-melted at temperatures less than 300 degrees Celsius. Specific examples of suitable polyamide resins include, but are not limited to, polycaproamide (nylon 6), polytetramethylene adipamide (nylon 46), polyhexamethylene adipamide (nylon 66), polyhexamethylene sebacamide (nylon 610), polyhexamethylene dodecamide (nylon 612), polyundecamethylene adipamide (nylon 116), polyundecanamide (nylon 11), polydodecanamide (nylon 12), polytrimethylhexamethylene terephthalamide (nylon TMHT), polyhexamethylene isophthalamide (nylon 61), polyhexamethylene terephthal/isophthalamide (nylon 6T/61), polynonamethylene terephthalamide (nylon 9T), polybis(4-aminocyclohexyl)methane dodecamide (nylon PACM12), polybis(3-methyl-4-aminocyclohexyl)methane dodecamide (nylon dimethyl PACM12), polymethaxylylene adipamide (nylon MXD6), polyundecamethylene terephthalamide (nylon 11T), polyundecamethylene hexahydroterephthalamide (nylon 11T(H)) and their copolymerized polyamides and mixed polyamides. Among these, nylon 6, nylon 46, nylon 66, nylon 11, nylon 12, nylon 9T, nylon MXD6, and their copolymerized polyamides and mixed polyamides are exemplary in terms of availability, handleability and the like.

Examples of thermoset resins include, but not limited to, silicones, epoxies, acrylics, phenolics, etc.

It will be appreciated that the base polymer resin material can be modified or provided with other fillers or additives, other than the boron nitride or hard filler material, to modify other properties such as impact resistance, UV stability, fire retardancy, etc.

The compositions (prior to or after mixing of the resin, boron nitride, and hard filler material components) can comprise from 20 wt. % to 80 wt. % of the polymer matrix; from 20 wt. % to 70 wt. % of the polymer matrix; from 35 wt. % to 65 wt. % of the polymer matrix; even from 42 wt. % to 58 wt. % of the polymer matrix. The composition can comprise from 15 wt. % to 70 wt. % of boron nitride; from 20 wt. % to 50 wt. %; from 25 wt. % to 40 wt. % of boron nitride; even from 30 wt. % to 35 wt.% of boron nitride. The composition can comprise from 10 wt. % to 70 wt. % of the hard filler material; from 15 wt. % to 50 wt. % of the hard material; from 17 wt. % to 30 wt. % of the hard material; even from 20 wt. % to 25 wt. % of the hard material. In one embodiment, the boron nitride is present in an amount of from 5 weight percent to 60 weight percent of the total composition weight; the hard filler material is present in an amount of from 10 weight percent to 55 weight percent of the total composition weight; and the resin material is present in an amount of from 20 weight percent to 75 weight percent of the total composition weight. Here as elsewhere in the specification and claims, numerical values can be combined to form new and non-disclosed ranges.

The inventors have found that mixing crystalline boron nitride with a resin material in the presence of a hard filler material provides for the in situ exfoliation of the boron nitride in the resin matrix and provides a composition comprising exfoliated boron nitride. The composition comprising exfoliated boron nitride can have higher aspect boron nitride particles compared to a composition that does not comprise the exfoliated boron nitride. In one embodiment, the composition comprising exfoliated boron nitride has a ratio of hard filler to boron nitride material (HM:BN) by volume of from 20:1 to 1:20; from 15:1 to 1: 15; from 10:1 to 1:10; from 8:1 to 1:8; from 5:1 to 1:5; from 3:1 to 1:3; from 2:1 to 1:2;

even 1:1. In one embodiment, the HM:BN ratio in the composition comprising the exfoliated boron nitride is from 1:20 to 1:1; from 1:10 to 1:8; from 1:5 to 1:3; even from 1:2 to 1:1. Here as elsewhere in the specification and claims, numerical values can be combined to form new and non-disclosed ranges.

The compositions comprising the exfoliated boron nitride generally have a thermal conductivity higher than that of a composition comprising the same weight percentage of boron nitride but that is devoid of any hard filler material over and above any contribution to the thermal conductivity from the hard filler material. In one embodiment, the compositions comprising the exfoliated boron nitride have a thermal conductivity that is higher than the predicted thermal conductivity based on the Lewis Nielsen model for boron nitride and the hard filler material(s). In one embodiment the composition comprising the exfoliated boron nitride has a thermal conductivity of 5 W/mK or greater; 6 W/mK or greater; 7.5 W/mK or greater: 10 W/mK or greater; even 12 W/mK or greater. In one embodiment, the composition comprising exfoliated boron nitride has a thermal conductivity of from 5 W/mK to 15 W/mK; from 6 W/mK to 12 W/mK; from 7.5 W/mK to 10 W/mK. Here as elsewhere in the specification and claims, numerical values can be combined to form new and non-disclosed ranges.

The present invention has been described with respect to various aspects and embodiments of the compositions comprising exfoliated boron nitride and a process for forming such compositions by the in situ exfoliation of boron nitride in a resin matrix. The invention can be further understood with respect to the following examples. The examples are merely for the purpose of illustrating aspects and additional embodiments of the invention and are not intended to limit the invention to the specific embodiments described therein.

Examples

Examples 1-21

Boron nitride powder (PT110 available from Momentive Performance Materials) is compounded with zinc oxide (AZO66XL available from U.S. Zinc) into Nylon 6 (from Sigma Aldrich) in a Brabender Plasti-corder batch mixer at 245 C° for eight minutes with a silane additive (NXT silane available from Momentive Performance Materials). The compounded sample is compression molded into a 4" x 4" sheet with a thickness of 0.3 mm. The concentrations of boron nitride, zinc oxide, Nylon 6, and silane are shown in Table 1. Comparative Example 1 is prepared in a similar manner to the Examples except that zinc oxide is excluded from composition.

Table 1

| Example | BN (wt%) | ZnO (wt%) | Silane (wt%) | Resin (wt%) | BN (vol%) | ZnO (vol%) | ZnO/BN Vol | TC (W/mK) | Pred. TC (Wm/K) | ATC (%) | Density (g/cc) | Theo. Dens. |
|---|---|---|---|---|---|---|---|---|---|---|---|---|
| Comparative Ex. 1 | 40% | 0% | 1.2% | 58.8% | 24.7% | 0.0% | 0.000 | 3.66 | 3.66 | 0.0 | 1.42 | 1.41 |
| Comparative Ex. 2 | 54.8% | 0% | 1.6% | 43.6% | 37.3% | 0% | 0.000 | 6.94 | 6.71 | 3.3 | 1.54 | 1.55 |
| Comparative Ex. 3 | 67.7% | 0% | 2.0% | 30.3% | 50.7% | 0% | 0.000 | 15.06 | 12.37 | 17.9 | | |
| 1 | 40% | 30% | 2.1% | 27.9% | 35.4% | 10.6% | 0.299 | 9.99 | 9.71 | 2.9 | 1.99 | 2.01 |
| 2 | 20% | 50% | 2.1% | 27.9% | 19.8% | 19.8% | 1.000 | 6.58 | 5.75 | 12.6 | 2.24 | 2.25 |
| 3 | 45% | 25% | 2.1% | 27.9% | 38.8% | 8.6% | 0.222 | 11.8 | 10.5 | 10.5 | 1.97 | 1.96 |
| 4 | 50% | 20% | 2.1% | 27.9% | 42.0% | 6.7% | 0.161 | 12.5 | 11.3 | 9.4 | 1.90 | 1.91 |
| 5 | 30% | 30% | 1.8% | 38.2% | 24.3% | 9.8% | 0.403 | 5.52 | 5.21 | 5.6 | 1.84 | 1.85 |
| 6 | 40% | 20% | 1.8% | 38.2% | 30.9% | 6.2% | 0.201 | 6.89 | 6.43 | 6.7 | 1.76 | 1.76 |
| 7 | 45% | 15% | 1.8% | 38.2% | 34.0% | 4.5% | 0.132 | 7.86 | 6.98 | 11.2 | 1.78 | 1.72 |
| 8 | 40% | 20% | 1.8% | 38.2% | 34.0% | 4.5% | 0.132 | 6.51 | 6.43 | 1.2 | 1.71 | 1.76 |
| 9 | 40% | 20% | 1.8% | 38.2% | 34.0% | 4.5% | 0.132 | 6.73 | 6.43 | 4.4 | 1.71 | 1.76 |
| 10 | 40% | 20% | 3.6% | 36.4% | 30.9% | 6.2% | 0.201 | 7.52 | 6.43 | 14.5 | 1.76 | 1.76 |
| 11 | 40% | 20% | 1.8% | 38.2% | 30.9% | 6.2% | 0.201 | 6.90 | 6.43 | 6.7 | 1.76 | 1.76 |
| 12 | 40% | 20% | 0.0% | 40.0% | 30.9% | 6.2% | 0.201 | 6.64 | 6.43 | 3.1 | 1.74 | 1.76 |
| 13 | 40% | 20% | 1.8% | 38.2% | 30.9% | 6.2% | 0.201 | 6.53 | 6.43 | 1.5 | 1.73 | 1.76 |
| 14 | 50% | 20% | 4.2% | 25.8% | 42.0% | 6.7% | 0.161 | 12.5 | 11.3 | 9.2 | 1.94 | 1.91 |
| 15 | 30% | 40% | 4.2% | 25.8% | 28.0% | 15.0% | 0.535 | 8.42 | 7.85 | 6.7 | 2.12 | 2.13 |
| 16 | 40% | 20% | 3.6% | 36.4% | 30.9% | 6.2% | 0.201 | 7.46 | 6.43 | 13.8 | 1.81 | 1.76 |
| 17 | 53% | 19% | 2.2% | 25.8% | 45.1% | 6.5% | 0.144 | 14.0 | 13.04 | 6.8 | 1.96 | 1.96 |
| 18 | 55% | 20% | 4.5% | 20.5% | 48.3% | 7.0% | 0.146 | 15.6 | 15.8 | -1.0 | 2.06 | 2.00 |
| 19 | 40% | 20% | 0.0% | 40.0% | 30.9% | 6.2% | 0.201 | 5.67 | 6.43 | -11.8 | 1.76 | 1.76 |

| Example | BN (wt%) | ZnO (wt%) | Silane (wt%) | Resin (wt%) | BN (vol%) | ZnO (vol%) | ZnO/BN Vol | TC (W/mK) | Pred. TC (Wm/K) | ATC (%) | Density (g/cc) | Theo. Dens. |
|---|---|---|---|---|---|---|---|---|---|---|---|---|
| 20 | 40% | 20% | 1.8% | 38.2% | 30.9% | 6.2% | 0.201 | 7.06 | 6.43 | 8.9 | 1.79 | 1.76 |
| 21 | 50% | 20% | 2.1% | 27.9% | 42.0% | 6.7% | 0.161 | 13.2 | 11.3 | 14.1 | 1.97 | 1.91 |
| 22 | 30% | 30% | 3.6% | 36.4% | 24.3% | 9.8% | 0.401 | 5.36 | 5.21 | 2.7 | 1.87 | 1.85 |
| 23 | 35% | 25% | 3.6% | 36.4% | 27.7% | 7.9% | 0.287 | 5.58 | 5.85 | -4.8 | 1.82 | 1.80 |
| 24 | 20% | 40% | 3.6% | 36.4% | 17.0% | 13.7% | 0.803 | 4.09 | 3.82 | 6.6 | 1.99 | 1.94 |
| 25 | 25% | 35% | 3.6% | 36.4% | 20.8% | 11.7% | 0.562 | 4.76 | 4.54 | 4.7 | 1.90 | 1.89 |
| 26 | 15% | 45% | 3.6% | 36.4% | 13.1% | 15.8% | 1.204 | 3.23 | 3.06 | 5.4 | 2.00 | 1.99 |
| 27 | 45% | 15% | 3.6% | 36.4% | 34.0% | 4.5% | 0.134 | 7.29 | 6.98 | 4.2 | 1.74 | 1.72 |
| 28 | 50% | 10% | 3.6% | 36.4% | 36.9% | 3.0% | 0.080 | 7.91 | 7.49 | 5.4 | 1.62 | 1.75 |
| 29 | 55% | 5% | 3.6% | 36.4% | 39.7% | 1.4% | 0.036 | - | 7.94 | - | - | 1.65 |
| Comparative Ex. 4 | 60% | 0 | 3.6% | 36.4% | 42.4% | 0 | 0 | - | 8.34 | - | - | 1.61 |
| 30 | 40% | 20% | 0 | 40.0% | 30.9% | 6.2% | 0.201 | 5.67 | 6.43 | | 1.76 | 1.76 |
| 31 | 40% | 20% | 1.8% | 38.2% | 30.9% | 6.2% | 0.201 | 7.06 | 6.43 | 8.9 | 1.79 | 1.76 |

EP 2 898 010 B1

Example 32

Example 32 is prepared in a manner similar to Examples 1-24 except that magnesium oxide (RF-10CS available from Ube Industries (Japan)) is used instead of zinc oxide as the hard material. The specifics of Example 32 are shown in Table 2.

Table 2

| Example | BN (wt%) | MgO (wt%) | Silane (wt%) | Resin | BN (vol%) | MgO (vol%) | MgO/BN Vol | TC (W/mK) | Pred. TC (Wm/K) | Difference in TC |
|---------|----------|-----------|--------------|-------|-----------|------------|------------|-----------|------------------|------------------|
| 32 | 40% | 20% | 0.036 | 36.4% | 29.8% | 9.5% | 0.318 | 6.44 | 7.22 | -12.1% |

As shown in Tables 1 and 2, the compositions comprising the hard filler material (e.g., zinc oxide or magnesium oxide) have higher thermal conductivities than Comparative Example 1 that does not include any hard material. Significantly, the compositions comprising the hard filler material exhibited thermal conductivities above the predicted thermal conductivity. The Lewis Nielsen model can be used to predict thermal conductivity of composites and is given by the following equations:

$$K_c = K_m \left( \frac{1+AB\phi}{1-B\psi\phi} \right) \qquad (1)$$

$$B = \frac{\lambda-1}{\lambda+A} \qquad \lambda = \frac{K_f}{K_m} \qquad A = 2\frac{L}{D} \qquad (2)$$

$$\psi = 1 + \left( \frac{1-\phi_m}{\phi_m^2} \right) \phi \qquad (3)$$

In the above equations, $K_f$ is the thermal conductivity of the filler, $K_m$ is matrix's and $K_c$ is final composite thermal conductivity. $\phi$ is the volume fraction of the filler in the system and $\phi_m$ is the maximum packing fraction for the filler system. For high aspect ratio fillers, A is related to the aspect ratio of the fillers as shown above, but is also dependent on the extent of orientation of the fillers. If the fillers are perfectly aligned, A is set to twice the aspect ratio as shown above. As can be seen from Equation 1, higher the aspect ratio of the fillers, higher the value of $A$, and hence higher the thermal conductivity. This model was extended to predict the thermal conductivity with multiple fillers to discount any direct contribution to the thermal conductivity of the composites by the hard material. Exceeding the thermal conductivity predicted by this model can be indicative of the observed exfoliation. The data of comparative examples 2 and 3 could be indicative of exfoliated BN albeit at very high loadings, which would make those formulations cost prohibitive. The present process provides exfoliated BN at lower BN loadings.

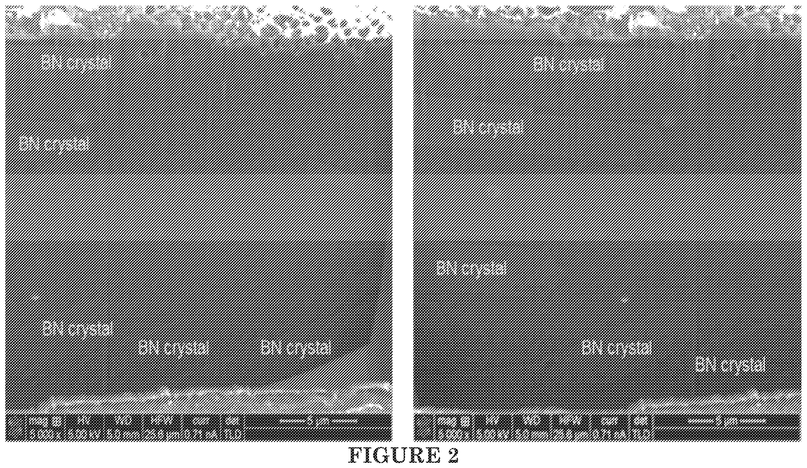

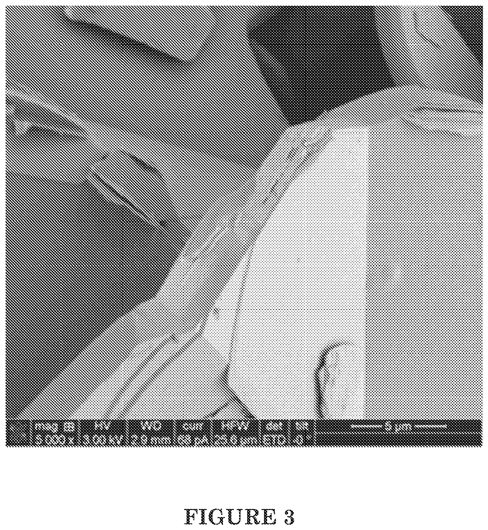

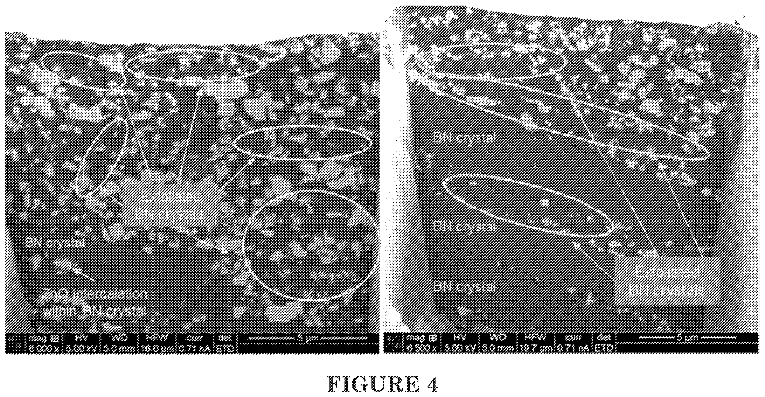

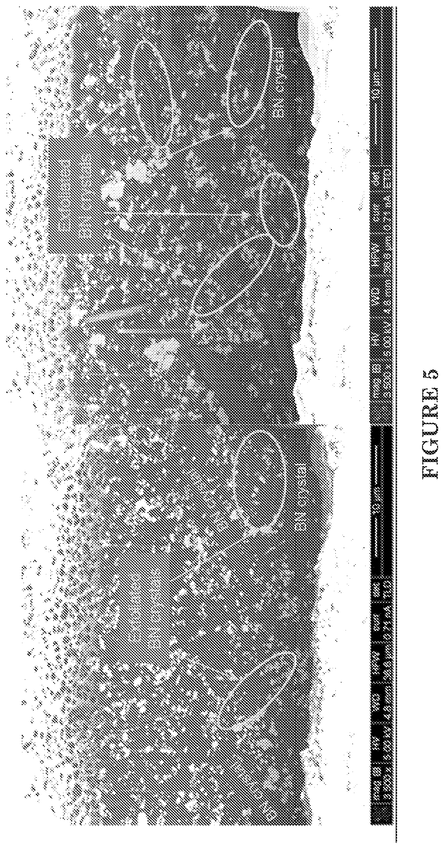

Additionally, at similar boron nitride loadings, the compositions comprising the hard material have a higher number of boron nitride particles than Comparative Example 1 (See Examples 1, 6, 8-13, 16, and 20-21), which suggests that the boron nitride has been exfoliated. SEM images illustrate the exfoliation of the boron nitride in the samples compounded with the hard material. FIGURE 2 is a back-scatter SEM image of the cross section of Comparative Example 1. In FIGURE 2, the boron nitride particles are fairly well dispersed in the matrix and have a thickness of 2.5 microns. This is consistent with the SEM analysis of PT110 crystals that are not dispersed in a resin material (*See* FIGURE 3). FIGURES 4 and 5 are SEM images of Examples 1 and 5, respectively, and illustrate that the compositions compounded with a hard material resulted in the exfoliation of the boron nitride. In Example 1, the exfoliated boron nitride sheets have a thickness of 0.15 microns and an aspect ratio from 13 to 50. In Example 5, the exfoliated boron nitride sheets have a thickness of 0.2 microns and an aspect ratio of from 8 to 58.

Examples 33-38

Blended filler compositions are prepared with boron nitride, zinc oxide, an optional glass fiber, and a silane. The silane is NXT. The blended fillers are prepared and introduced into a Nylon 6 resin in a Brabender Plasti-corder. The fillers introduced into the resins are either introduced with or without prior heat treatment of the blended filler. Filler compositions that are heat treated prior to introduction into the resin are heat treated at 50 °C for 72 hours in a convection oven. Table 3 shows the thermal conductivities of the compositions.

Table 3

| Example | BN Grade | BN wt.% | ZnO wt. % | Glass Fiber wt.% | Silane | Filler Heat Treated | Resin wt. % | TC (W/mK) |
|---|---|---|---|---|---|---|---|---|
| 33 | CF600 | 36.8 | 7.8 | 10.4 | 1.7 | No | 43.4 | 4.7 |
| 34 | CF600 | 36.8 | 7.8 | 10.4 | 1.7 | Yes | 43.4 | 4.9 |
| 35 | CF600 | 20 | 50 | --- | 2.1 | No | 27.9 | 4.7 |
| 36 | CF600 | 20 | 50 | --- | 2.1 | Yes | 27.9 | 5.4 |
| 37 | PT110 | 40 | 30 | --- | 3.5 | No | 26.5 | 9.5 |

(continued)

| Example | BN Grade | BN wt.% | ZnO wt.% | Glass Fiber wt.% | Silane | Filler Heat Treated | Resin wt.% | TC (W/mK) |
|---------|----------|---------|----------|------------------|--------|---------------------|------------|-----------|
| 38 | PT110 | 40 | 30 | --- | 3.5 | Yes | 26.5 | 11.2 |

The foregoing description identifies various, non-limiting embodiments of compositions comprising exfoliated boron nitride and methods of forming such compositions via the in situ exfoliation of boron nitride in a resin matrix.

**Claims**

1.    A composition comprising a resin material, exfoliated boron nitride, a silane as a functionalization additive, and a hard filler material having a Mohs hardness greater than the Mohs hardness of hexagonal boron nitride, wherein the exfoliated boron nitride is produced in situ by mixing boron nitride crystals with the resin material in the presence of the hard filler, wherein the boron nitride, hard filler material, and silane are provided as a blended filler composition comprising a blend of the boron nitride, hard filler material, and the silane, and wherein the silane is chosen from a thiocarboxylate silane, a blocked mercapto silane, or a combination thereof.

2.    The composition of claim 1, wherein the composition comprises from 5 weight percent to 60 weight percent of boron nitride; from 1 weight percent to 55 weight percent of the hard filler material; from 1 to 10 weight percent of the silane; and from 20 weight percent to 75 weight percent of the resin material, wherein the composition preferably comprises from 20 weight percent to 50 weight percent of boron nitride; from 10 weight percent to 50 weight percent of the hard filler material; from 0.1 to 7 weight percent of the silane; and from 20 weight percent to 75 weight percent of the resin material.

3.    The composition of claim 1, comprising from 15 volume percent to 50 volume percent of boron nitride.

4.    The composition of any of claims 1-3, wherein the exfoliated boron nitride has an average thickness of 1 micron or less, as determined with SEM.

5.    The composition of any of claims 1-4, wherein the ratio of hard filler material to boron nitride is at least from 20:1 to 1:20 by volume, wherein the ratio of hard filler material to boron nitride is preferably at least from 10:1 to 1:10 by volume.

6.    The composition of any of claims 1-5, where the boron nitride crystal diameter is greater than 3 microns, as measured using a Horiba LA300 particle size distribution analyzer where the boron nitride crystal is introduced in an amount adjusted to meet the required transmission and a few drops of 2% Rhodapex CO-436 are added to improve the dispersion of the powder, and the particle size is measured using laser diffraction after a 3 second sonication.

7.    The composition of any of claims 1-6, where the boron nitride graphitization index is less than 4.

8.    The composition of any of claims 1-7, wherein the hard filler material is chosen from zinc oxide, magnesium oxide, silica, alumina, aluminum nitride, silicon nitride, silicon carbide, titania, tungsten carbide, titanium nitride or a combination of two or more thereof, a metal oxide chosen from zinc oxide, magnesium oxide, aluminum oxide, beryllium oxide, yttrium oxide, hafnium oxide, or a combination of two or more thereof; a nitride chosen from aluminum nitride, silicon nitride, cubic boron nitride, or a combination thereof; silica; a carbide chosen from silicon carbide, titanium carbide, tantalum carbide, beryllium carbide, boron carbide, or a combination of two or more thereof; a boride chosen from zirconium boride, titanium diboride, aluminum boride, or a combination of two or more thereof; paticles or metals or pure elements chosen from powders, particles, or flakes of aluminum, copper, bronze, brass, boron, silicon, nickel, nickel alloys, tungsten, tungsten alloys, or a combination of two or more thereof; apatite, feldspar, topaz, garnet, andalusite, asbestos, barite, flint fluorite, hematite, pyrite, quartz, perovskite, titanates, silicates, chalcogenide, or a combination of two or more thereof; or a combination of two or more of any of these materials.

9.    The composition of any of claims 1-8, wherein the hard filler material has a Mohs hardness of from 2 to 9.5.

10.    The composition of any of claims 1-9, wherein the blended composition comprises the silane condensed onto the surface of the blend of the boron nitride and the hard filler material.

11. A method of forming a thermally conductive composition comprising a blended filler composition comprising a blend of exfoliated boron nitride, a hard filler material, and a silane according to any one of claims 1 to 10, the method comprising exfoliating boron nitride crystals in situ by mixing the blended filler composition in a resin material, wherein the silane is chosen from a thicaraboxylate silane, a blocked mercapto silane, or a combination thereof.

12. The method of claim 11, wherein the hard filler material has a particle size of from 50 nanometers to 100 micron.

13. The method of claim 11 or 12, wherein mixing is accomplished using a mixer, a roll, a set of rolls, a kneader, a co-kneader, a Banbury mixer, a single screw extruder, a twin screw extruder, or a combination of two or more thereof.

**Patentansprüche**

1. Zusammensetzung, umfassend ein Harzmaterial, abgeschältes Bornitrid, ein Silan als ein Funktionalisierungsadditiv und ein hartes Füllmaterial mit einer Mohs-Härte von größer als der Mohs-Härte von hexagonalem Bornitrid, wobei das abgeschälte Bornitrid *in situ* hergestellt wird durch Mischen von Bornitridkristallen mit dem Harzmaterial in der Gegenwart des harten Füllmittels, wobei das Bornitrid, das harte Füllmittelmaterial und Silan als ein Füllmittelzusammensetzungsgemisch, umfassend ein Blend des Bornitrids, harten Füllmittelmaterials und des Silans, bereitgestellt werden, und wobei das Silan aus Thiocarboxylatsilan, einem geblockten Mercaptosilan oder einer Kombination davon ausgewählt ist.

2. Zusammensetzung gemäß Anspruch 1, wobei die Zusammensetzung von 5 Gew.-% bis 60 Gew.-% Bornitrid, von 1 Gew.-% bis 55 Gew.-% des harten Füllmittelmaterials, von 1 bis 10 Gew.-% des Silans und von 20 Gew.-% bis 75 Gew.-% des Harzmaterials umfaßt, wobei die Zusammensetzung vorzugsweise von 20 Gew.-% bis 50 Gew.-% Bornitrid, von 10 Gew.-% bis 50 Gew.-% des harten Füllmittelmaterials, von 0,1 bis 7 Gew.-% des Silans, und von 20 Gew.-% bis 75 Gew.-% des Harzmaterials umfaßt.

3. Zusammensetzung gemäß Anspruch 1, umfassend von 15 Volumenprozent bis 50 Volumenprozent Bornitrid.

4. Zusammensetzung gemäß einem der Ansprüche 1-3, wobei das abgeschälte Bornitrid eine durchschnittliche Dicke von 1 Mikrometer oder weniger, bestimmt mit SEM, aufweist.

5. Zusammensetzung gemäß einem der Ansprüche 1-4, wobei das Verhältnis von hartem Füllmaterial zu Bornitrid mindestens von 20:1 bis 1:20, bezogen auf das Volumen, beträgt, wobei das Verhältnis von hartem Füllmittelmaterial zu Bornitrid vorzugsweise mindestens von 10:1 bis 1:10, bezogen auf das Volumen, beträgt.

6. Zusammensetzung gemäß einem der Ansprüche 1-5, wobei der Bornitridkristalldurchmesser größer als 3 Mikrometer ist, gemessen unter Verwendung eines Horiba LA300 Teilchengrößenverteilungsanalysegeräts, wobei der Bornitridkristall in einer Menge eingeführt wird, eingerichtet um die erforderliche Transmission zu erfüllen, und wenige Tropfen von 2% Rhodapex CO-436 zugegeben werden, um die Dispersion des Pulvers zu verbessern, und die Teilchengröße unter Verwendung von Laserdiffraktion nach einer Ultraschallbehandlung von 3 Sekunden gemessen wird.

7. Zusammensetzung gemäß einem der Ansprüche 1-6, wobei der Bornitridgraphitisierungsindex weniger als 4 beträgt.

8. Zusammensetzung gemäß einem der Ansprüche 1-7, wobei das harte Füllmittelmaterial ausgewählt ist aus Zinkoxid, Magnesiumoxid, Silica, Aluminiumoxid, Aluminiumnitrid, Siliciumnitrid, Siliciumcarbid, Titanoxid, Wolframcarbid, Titannitrid oder einer Kombination von zwei oder mehreren davon, einem Metalloxid ausgewählt aus Zinkoxid, Magnesiumoxid, Aluminiumoxid, Berylliumoxid, Yttriumoxid, Hafniumoxid oder einer Kombination von zwei oder mehreren davon, einem Nitrid ausgewählt aus Aluminiumnitrid, Siliciumnitrid, kubischem Bornitrid oder einer Kombination davon, Silica, einem Carbid ausgewählt aus Siliciumcarbid, Titancarbid, Tantalcarbid, Berylliumcarbid, Borcarbid oder einer Kombination von zwei oder mehreren davon, einem Borid ausgewählt aus Zirconiumborid, Titandiborid, Aluminiumborid oder einer Kombination von zwei oder mehreren davon, Teilchen oder Metallen oder Reinelementen ausgewählt aus Pulvern, Teilchen oder Plättchen von Aluminium, Kupfer, Bronze, Messing, Bor, Silicium, Nickel, Nickellegierungen, Wolfram, Wolframlegierungen oder einer Kombination von zwei oder mehreren davon, Apatit, Feldspat, Topas, Garnet, Andalusit, Asbest, Barit, Flintfluorit, Hämatit, Pyrit, Quarz, Perovskit, Titanaten, Silicaten, Chalcogeniden oder einer Kombination von zwei oder mehreren davon, oder einer Kombination von zwei oder mehreren von jedwedem dieser Materialien.

9. Zusammensetzung gemäß einem der Ansprüche 1-8, wobei das harte Füllmittelmaterial eine Mohs-Härte von 2 bis 9,5 aufweist.

10. Zusammensetzung gemäß einem der Ansprüche 1-9, wobei das Zusammensetzungsgemisch das Silan kondensiert auf der Oberfläche des Gemisches von dem Bornitrid und dem harten Füllmittelmaterial umfaßt.

11. Verfahren zum Bilden einer thermisch leitfähigen Zusammensetzung, umfassend ein Füllmittelzusammensetzungsgemisch, umfassend ein Blend von abgeschältem Bornitrid, einem harten Füllmittelmaterial und einem Silan gemäß einem der Ansprüche 1 bis 10, wobei das Verfahren abgeschälte Bornitridkristalle *in situ* durch Mischen des Füllmittelzusammensetzungsgemisches in einem Harzmaterial, wobei das Silan aus einem Thiocarboxylatsilan, einem geblockten Mercaptosilan oder einer Kombination davon ausgewählt ist, umfaßt.

12. Verfahren gemäß Anspruch 11, wobei das harte Füllmittelmaterial eine Teilchengröße von 50 Nanometer bis 100 Mikrometer aufweist.

13. Verfahren gemäß Anspruch 11 oder 12, wobei das Mischen unter Verwendung eines Mischers, einer Walze, einem Walzensatz, einem Kneter, einem Co-Kneter, einem Banbury-Mischer, einem Einzelschraubenextruder, einem Zweischraubenextruder oder einer Kombination von zwei oder mehreren davon erreicht wird.

**Revendications**

1. Composition comprenant une résine, du nitrure de bore exfolié, un silane en tant qu'additif de fonctionnalisation, et une charge dure ayant une dureté de Mohs supérieure à la dureté de Mohs du nitrure de bore hexagonal, où le nitrure de bore exfolié est produit in situ par mélange de cristaux de nitrure de bore avec la résine en présence de la charge dure, où le niture de bore, la charge dure et le silane sont fournis sous forme d'une composition mixte de charge comprenant un mélange du nitrure de bore, de la charge dure et du silane, et où le silane est choisi parmi un silane thiocarboxylate, un mercaptosilane bloqué ou une combinaison de ceux-ci.

2. Composition selon la revendication 1, où la composition comprend de 5% en poids à 60% en poids de nitrure de bore; de 1% en poids à 55% en poids de la charge dure ; de 1 à 10% en poids du silane, et de 20% en poids à 75% en poids de la résine, où la composition comprend de préférence de 20% en poids à 50% en poids de nitrure de bore; de 10% en poids à 50% en poids de la charge dure; de 0,1 à 7% en poids du silane, et de 20% en poids à 75% en poids de la résine.

3. Composition selon la revendication 1, comprenant de 15% en volume à 50% en volume de nitrure de bore.

4. Composition selon l'une quelconque des revendications 1 3, où le nitrure de bore exfolié a une épaisseur moyenne de 1 micron ou moins, déterminée par MEB.

5. Composition selon l'une quelconque des revendications 1 à 4, où le rapport de la charge dure au nitrure de bore se situe dans l'intervalle allant d'au moins 20:1 à 1:20 en volume, où le rapport de la charge dure au nitrure de bore se situe de préférence dans l'intervalle allant d'au moins 10:1 à 1:10 en volume.

6. Composition selon l'une quelconque des revendications 1 à 5, où le diamètre du cristal de nitrure de bore est supérieur à 3 microns, mesuré par un analyseur de distribution de la taille particulaire Horiba LA300, où le cristal de nitrure de bore est introduit en une quantité ajustée pour satisfaire la transmission requise et quelques gouttes de Rhodapex CO-436 à 2% sont ajoutées pour améliorer la dispersion de la poudre, la taille particulaire étant mesurée par diffraction laser après 3 secondes de sonication.

7. Composition selon l'une quelconque des revendications 1 à 6, où l'indice de graphitisation du nitrure de bore est inférieur à 4.

8. Composition selon l'une quelconque des revendications 1 à 7, où la charge dure est choisie parmi de l'oxyde de zinc, de l'oxyde de magnésium, de la silice, de l'alumine, du nitrure d'aluminium, du nitrure de silicium, du carbure de silicium, de l'oxyde de titane, du carbure de tungstène, du nitrure de tungstène ou une combinaison de deux ou plusieurs de ceux-ci, un oxyde métallique choisi parmi de l'oxyde de zinc, de l'oxyde de magnésium, de l'oxyde d'aluminium, de l'oxyde de béryllium, de l'oxyde d'yttrium, de l'oxyde de hafnium, ou une combinaison de deux ou plusieurs de ceux-ci ; un nitrure choisi parmi du nitrure d'aluminium, du nitrure de silicium, du nitrure de bore cubique ou une combinaison de ceux-ci ; de la silice ; un carbure choisi parmi du carbure de silicium, du carbure de titane, du carbure de tantale, du carbure de béryllium, du carbure de bore ou une combinaison de deux ou plusieurs de ceux-ci ; un borure choisi parmi du borure de zirconium, du diborure de titane, du borure d'aluminium ou une combinaison de deux ou plusieurs de ceux-ci ; des particules ou des métaux ou des éléments purs choisis parmi une poudre, des particules ou des copeaux d'aluminium, de cuivre, de bronze, de laiton, de bore, de silicium, de nickel, d'alliages de nickel, de tungstène, d'alliages de tungstène ou une combinaison de deux ou plusieurs de ceux-ci ; de l'apatite, du feldspath, de la topaze, du grenat, de l'andalousite, de l'amiante, de la baryte, de la fluorite flint, de l'hématite, de la pyrite, du quartz, de la perovskite, des titanates, des silicates, un chlacogénure, ou une combinaison de deux ou plusieurs de ceux-ci ; ou une combinaison de deux ou plusieurs de l'un quelconque de ces matériaux.

9. Composition selon l'une quelconque des revendications 1 à 8, où la charge dure a une dureté de Mohs située dans l'intervalle allant de 2 à 9,5.

10. Composition selon l'une quelconque des revendications 1 à 9, où la composition mixte comprend le silane condensé sur la surface du mélange de nitrure de bore et de charge dure.

11. Procédé de préparation d'une composition thermiquement conductrice comprenant une composition mixte de charge comprenant un mélange de nitrure de bore exfolié, une charge dure et un silane selon l'une quelconque des revendications 1 à 10, le procédé comprenant l'exfoliation de cristaux de nitrure de bore in situ par mélange de la composition mixte de charge dans une résine, où le silane est choisi parmi un silane thiocarboxylate, un mercaptosilane bloqué ou une combinaison de ceux-ci.

12. Procédé selon la revendication 11, où la charge dure a une taille particulaire située dans l'intervalle allant de 50 nanomètres à 100 microns.

13. Procédé selon la revendication 11 ou 12, où le mélange est effectué à l'aide d'un mélangeur, d'un cylindre, d'un jeu de cylindres, d'un malaxeur, d'un co-malaxeur, d'un mélangeur Banbury, d'une extrudeuse à vis simple, d'une extrudeuse à vis double, ou d'une combinaison de deux ou plusieurs de ceux-ci.

FIGURE 1

FIGURE 2

FIGURE 3

FIGURE 4

FIGURE 5

**REFERENCES CITED IN THE DESCRIPTION**

**Patent documents cited in the description**

- KR 20110124127 A
- US 6652822 B
- US 20010021740 A
- US 5898009 A
- US 6048511 A
- US 20050041373 A
- US 20040208812 A1
- US 6951583 B

**Non-patent literature cited in the description**

- **SHEN et al.** Intercalation of Hexagonal Boron Nitride by Strong Oxidizers and Evidence for the Metallic Nature of the Products. *Journal of Solid State Chemistry,* 1999, vol. 147, 74-81